# EUROPÄISCHE PATENTANMELDUNG

(11) **EP 2 597 346 A1**
(43) Veröffentlichungstag der Anmeldung: **29.05.2013**
(21) Anmeldenummer: 12194644.6
(22) Anmeldetag: 28.11.2012
(51) Int. Cl.: F16L 25/01, F16L 39/02, F16L 55/10, B67D 7/32

(54) **Betankungsvorrichtung für Kraftfahrzeuge**

(30) Priorität: 28.11.2011 DE 202011052124 U
(71) Anmelder: Parker Hannifin Manufacturing Germany GmbH & Co. KG, 33659 Bielefeld (DE)
(72) Erfinder: Weil, Andreas, 64668 Rimbach (DE); Bönig, Jürgen, 64693 Einhausen (DE); Witt, Stefan, 71735 Eberdingen-Nussdorf (DE); Nowack, Olaf, 73574 Iggingen (DE); Guadagnuolo, Luca, 21013 Gallarate (IT); Cavalli, Arialdo, 22071 Cadorago (IT)
(74) Vertreter: Müller, Karl-Ernst

(57) **Zusammenfassung**

Betankungsvorrichtung für Kraftfahrzeuge mit einem an eine mit einer Pumpe versehene Zapfsäule angeschlossenen Schlauch (11) und einer am Ende des Schlauches (11) angeordnete Zapfpistole (10), wobei der Schlauch (11) einen inneren, den Kanal (20) zur Durchleitung des Mediums aufweisenden Schlauchkörper (17) aufweist, der im Inneren eines äußeren Schlauchkörpers (18) verläuft, so dass der Kanal (21) zur Durchleitung der Dämpfe von dem Ringraum zwischen dem inneren Schlauchkörper (17) und dem äußeren Schlauchkörper (18) gebildet ist, und wobei eine Unterbrechungsvorrichtung (12) durch ein am Ende des Schlauches (11) angebrachtes, entsprechend verlaufende Kanäle aufweisendes Kupplungsstück (22) und einen in das Kupplungsstück (22) eingesteckten und mit dem Kupplungsstück (22) durch formschlüssigen Eingriff von federnd ausgebildeten Verriegelungsmitteln lösbar verriegelten Ansatz (24) der Zapfpistole (10) gebildet ist, und dass in dem Mantel des äußeren Schlauchkörpers (18) eine Signalleitung zur Übertragung von Signalen von der Zapfpistole (10) zur Zapfsäule angeordnet ist, deren das Kupplungsstück (22) überbrückendes Ende mit einem in der Zapfpistole (10) angeordneten elektrischen Anschluss (29) verbunden ist.

## Beschreibung

Die Erfindung betrifft eine Betankungsvorrichting für Kraftfahrzeuge mit einem an eine mit einer Pumpe versehene Zapfsäule angeschlossenen Schlauch und einer am Ende des Schlauches angeordnete Zapfpistole, wobei der Schlauch zwei konzentrisch zueinander angeordnete Kanäle zur Durchleitung von Medium zur Zapfpistole und zur Rückleitung der beim Betanken aus dem Vorratsbehälter des Kraftfahrzeuges austretenden Dämpfe von der Zapfpistole weg aufweist, und wobei eine Vorrichtung zur selbsttätigen Unterbrechung der Verbindung zwischen Zapfsäule und Zapfpistole bei Überschreitung einer voreingestellten Zugbelastung vorgesehen ist.

Eine Betankungsvorrichtung mit den vorgenannten Merkmalen ist in der DE 694 18 189 T2 beschrieben, bei welcher der Schlauch einen äußeren Durchgang zum Liefern von Kraftstoff und einen koaxialen inneren Durchgang zur Durchleitung der Dämpfe aus dem Fahrzeugkraftstofftank aufweist. Bei der bekannten Betankungsvorrichtung ist in den Verlauf des Schlauches in der Nähe der Tanksäule eine Abreiß- bzw. Abbrech- bzw. Unterbrechungsbaugruppe eingeschaltet, die es ermöglicht, dass in dem Falle, dass ein Kraftfahrzeug sich von der Tanksäule wegbewegt, ohne dass die Zapfsäule wieder an der Tanksäule eingehängt ist, eine Trennung des Schlauches an der Unterbrechungsbaugruppe erfolgt, ohne dass Kraftstoff austritt oder Dämpfe frei werden. Hierzu weist die Unterbrechungsbaugruppe zwei miteinander verriegelte, jeweils an einem Schlauchabschnitt befestigte Kupplungsstücke auf, wobei in jedem Kupplungsstück jedem der beiden Kanäle ein bei Trennung der Kupplungsstücke voneinander automatisch betätigtes Schließglied für die Kanäle zugeordnet ist. Zur Verriegelung der Kupplungsstücke miteinander ist eine radial angeordnete Scherschraube vorgesehen, die den äußeren Bereich des einen äußeren Kupplungsstücks durchgreift und in eine an dem in das äußere Kupplungsstück eingesteckten anderen inneren Kupplungsstück befestigte Scherbuchse eingreift.

Mit der bekannten Betankungsvorrichtung sind insbesondere die Nachteile verbunden, dass sich einerseits die Unterbrechungsbaugruppe in der Nähe der Tanksäule befindet, so dass beim Wegfahren das Fahrzeug den Schlauch in seiner Länge mitziehen würde, und andererseits die zur Verriegelung der Kupplungsstücke miteinander vorgesehene Scherschraube aufwendig zu montieren ist, auch wenn zur Ausrichtung der Kupptungsstücke zueinander an den Kupplungsstücken Zentriervorrichtung ausgebildet ist.

Der Erfindung liegt daher die Aufgabe zugrunde, eine Betankungsvorrichtung mit den eingangs genannten Merkmalen so zu verbessern, dass die vorgenannten Nachteile vermieden sind.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der Schlauch einen inneren, den Kanal zur Durchleitung des Mediums aufweisenden Schlauchkörper aufweist, der im Inneren eines äußeren Schlauchkörpers verläuft, so dass der Kanal zur Durchleitung der Dämpfe von dem Ringraum zwischen dem inneren Schlauchkörper und dem äußeren Schlauchkörper gebildet ist, und dass die Unterbrechungsvorrichtung durch ein am Ende des Schlauches angebrachtes, entsprechend verlaufende Kanäle aufweisendes Kupplungsstück und einen in das Kupplungsstück eingesteckten und mit dem Kupplungsstück durch formschlüssigen Eingriff von federnd angeordneten Verriegelungsmitteln lösbar verriegelten Ansatz der Zapfpistole gebildet ist, und dass in dem Mantel des äußeren Schlauchkörpers eine Signalleitung zur Übertragung von Signalen von der Zapfpistole zur Zapfsäule angeordnet ist, deren das Kupplungsstück überbrückendes Ende mit einem in der Zapfpistole angeordneten elektrischen Anschluss verbunden ist.

Soweit zunächst erfindungsgemäß der Schlauch aus zwei ineinander gesteckten getrennten Schlauchkörpern besteht, sind damit die Stabilität und Haltbarkeit des Schlauches auch bei häufiger auftretenden Knickbeanspruchungen verbessert. Da die Unterbrechungsvorrichtung zwischen dem Ende des Schlauches und der Zapfpistole angebracht ist, würde bei einem Wegfahren des Fahrzeuges allenfalls die Zapfpistole vom Schlauchende gelöst. Die Verbindung von Schlauchende und Zapfpistole besteht erfindungsgemäß aus einem am Ende des Schlauches angebrachten Kupplungsstück und aus einem in das Kupplungsstück eingesteckten Ansatz der Zapfpistole, wobei zur Verriegelung von Kupplungsstück und Ansatz an dem Kupplungsstück federnd ausgebildete Verriegelungsmittel vorgesehen sind, die formschlüssig an dem Ansatz der Zapfpistole angreifen. Dabei sind die Verriegelungsmittel so ausgebildet, dass sich bei einer entsprechend auf die Verbindung zwischen Zapfpistole und Schlauchende ausgeübten Zugbelastung die Verriegelungsmittel aufbiegen und den Ansatz der Zapfpistole freigeben. Da die Verriegelungs₋ mittel nach Freigabe der Zapfpistole entsprechend zurückfedern, ist die Zapfpistole wieder in das Kupplungsstück einsteckbar und damit verriegelbar Somit ermöglicht die erfindungsgemäße Ausbildung der Unterbrechungsvorrichtung eine mehrfache Benutzung, ohne dass eine Beschädigung der Verbindung und ein damit verbundener Reparaturaufwand auftritt. Schließlich trägt die Erfindung auch heutigen Vorgaben Rechnung, wonach im Rahmen der Betankung für eine Übertragung von Signalen von der Zapfpistole zur Tanksäule Sorge getragen werden muss. Hierzu sieht die Erfindung vor, dass in dem Mantel des äußeren Schlauchkörpers eine Signalleitung zur Übertragung derartiger Signale angeordnet ist, deren das Kupplungsstück überbrückendes Ende mit einem in der Zapfpistole angeordneten elektrischen Anschluss verbunden ist, wobei sich dieser Anschluss bei einer Trennung von Zapfpistole Schlauchende ebenfalls löst.

Die erfindungsgemäße Betankungsvorrichtung eignet sich neben einer Betankung von Kraftfahrzeugen mit Kraftstoff als Medium insbesondere auch zu einer Betankung mit ADBLUE als einem einen 32%igen Anteil an Harnstoff aufweisenden Medium, wobei die Betankung von entsprechenden Zusatztanks oder sonstigen im Fahrzeug angeordneten Vorratsbehältern sozusagen in eigeschlossenen System erfolgen kann.

Nach einem Ausführungsbeispiel der Erfindung ist vorgesehen, die Signalleitung aus einer Mehrzahl von einzelnen, getrennt voneinander im Mantel des äußeren Schlauchkörpers verlegten Litzen besteht, die im Bereich des Anschlusses des Kupptungsstückes an Schlauchkörper unter Aufrechterhaltung einer gegenseitigen Abschirmung zu einem Verbindungskabel zusammengefasst sind. Dabei dienen die einzelnen, gegeneinander abgeschirmten Litzen zur Übertragung unterschiedlicher Signale.

Hierbei kann aus Gründen des Schutzes der an dem Schlauch verlegten Litzen vorgesehen sein, der äußere Schlauchkörper zweiteilig mit einem Innenmantel und einem Außenmantel aufgebaut ist und die Litzen zwischen dem Innenmantel und dem Außenmantel angeordnet und beispielsweise wendelförmig um den Innenmantel geschlungen sind.

Nach einem Ausführungsbeispiel der Erfindung ist vorgesehen, dass am Ende des Verbindungskabels ein elektrischer Stecker angebracht ist, der in eine an der Zapfpistole ausgebildete Steckeraufnahme eingesteckt ist. Eine derartige Steckverbindung erleichtert die Montage der Betankungsvorrichtung und ermöglicht auch ein wiederholbares Trennen und Zusammenfüngen der Verbindung.

Nach einem Ausführurgsbeispiel der Erfindung ist vorgesehen, dass die Verriegelungsmittel aus mehreren, konzentrisch an dem Kupplungsstück auswärts federnd angeordneten Fingern bestehen, die mit an ihnen angeordneten, radial nach innen vorstehenden Vorsprüngen in einen am äußeren Umfang des zwischen die Finger reichenden Ansatzes der Zapfpistole ausgebildeten. Rücksprung rastend eingreifen. Eine derartige Rastverbindung ermöglicht eine einfache Erstmontage und ebenfalls eine wiederholbare Trennung und erneute Montage der Zapfpistole am Ende des Schlauches.

Gemäß einem Ausführungsbeispiel der Erfindung ist vorgesehen, dass Kupplungsstück und Ansatz in miteinander verriegeltem Zustand gegeneinander verdrehbar sind, wobei eine zwischen Ansatz und Kupplungsstück wirksame Begrenzungsanordnung zur Festlegung des Verdrehweges vorgesehen ist.

Hierbei kann als Begrenzungsvorichtung an dem Kupplungsstück ein radial abstehender Stift ausgebildet sein, der in eine über einen vorgegebenen Umfangsbereich in dem Ansatz ausgebildeten Ausnehmung eingreift und darin geführt ist, wobei Winkel zur gegenseitigen Verdrehung von Kupplungsstück und Ansatz bzw. die Umfangserstreckung der Ausfräsung am Ansatz 270 Grad betragen kann.

Soweit im Bereich der Zapfsäule eine Abfuhr der über den Schlauch rückgeführten Dämpfe zu erfolgen hat, kann nach einem Ausführungsbeispiel der Erfindung vorgesehen sein, dass an dem der Zapfsäule nahen Ende des Schlauches ein Y-förmiges Anschlussstück derart an den inneren Schlauchkörper und den äußeren Schlauchkörper angeschlossen ist, dass der im inneren Schlauchkörper verlaufende Kanal durch das Anschlussstück hindurchgeführt ist und der im Ringraum zwischen dem inneren Schlauchkörper und dem äußeren Schlauchkörper verlaufende Kanal in einen zweiten, an dem Anschlussstück ausgebildeten Ausgang mündet, so dass eine Abfuhrleitung für die Dämpfe an den Ausgang des Y-förmigen Anschlussstücks abgeschlossen werden kann.

In der Zeichnung ist ein Ausführungsbeispiel der Erfindung wiedergegeben, welches nachstehend beschrieben ist. Es zeigen:
- Fig. 1: Eine Zapfpistole mit angeschlossenem, stark verkürzt dargestellten Schlauch in einer seitlichen Schnittansicht,
- Fig. 2: den zwischen Schlauchende und Zapfpistole gelegenen Bereich mit der darin angeordneten Unterbrechungsvorrichtung in von einander getrenntem Zustand in einer Darstellung entsprechend Figur 1,
- Fig. 3: den Gegenstand der Figur 2 in angekoppeltem Zustand,
- Fig. 4: den äußeren Schlauchkörper des Schlauches mit den darin angeordneten Signalleitungslitzen in einer Einzeldarstellung,
- Fig. 5: das zapfsäulenseitige Ende des Schlauches in einer Einzeldarstellung gemäß Figur 1.

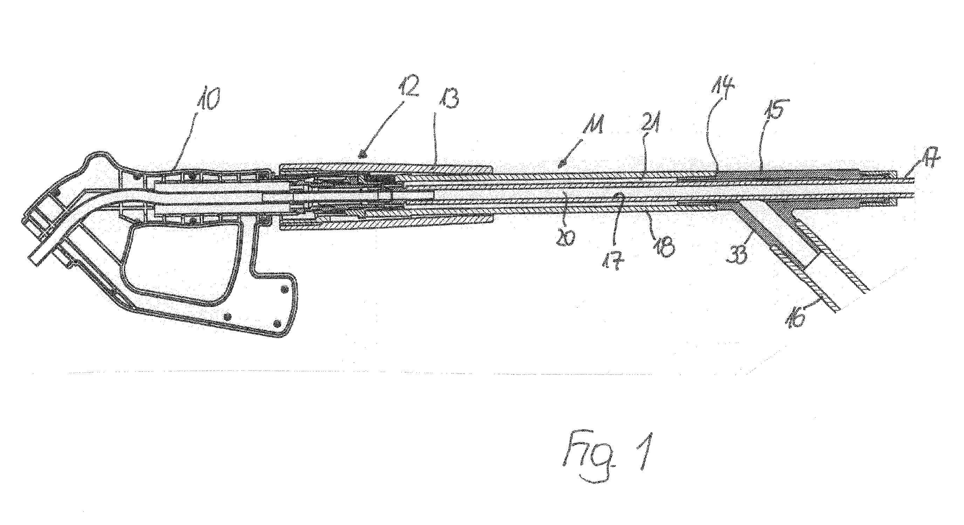

In Figur 1 ist eine Zapfpistole 10 mit einem daran angeschlossenen Schlauch 11 dargestellt, wobei zwischen Zapfpistole 10 und Schlauch 11 eine im Einzelnen noch zu beschreibende Unterbrechungsvorrichtung 12 eingeschaltet ist, wobei der die Unterbrechungsvorrichtung aufnehmende Bereich zwischen Zapfpistole 10 und Schlauch 11 von einer äußeren Schutzhülle 1.3 umgeben ist. Die Zapfpistole 10 ist dabei nur teilweise, nämlich ohne den in einen am Fahrzeug vorhandenen Vorratsbehälter, beispielsweise einen Tank, einzuführenden Auslass dargestellt. An dem der Zapfpistole 10 gegenüberliegenden Ende 14 des zum Zwecke der zeichnerischen Darstellung stark verkürzt dargestellten Schlauches 11 ist ein Y-förmiges Anschlussstück 15 angeordnet, an dem ein Anschlussschlauch 16 zur Abfuhr der beim Betanken aus dem Fahrzeugvorratsbehälter weggeführten Dämpfe angeschlossen ist.

Wie sich ferner aus Figur 1 ergibt, besteht der Schlauch 11 aus einem der Durchleitung des Kraftstoffes dienenden inneren Schlauchkörper 17, der seinerseits unter Bildung eines Ringraumes in einen äußeren Schlauchkörper 18 eingeschoben ist.

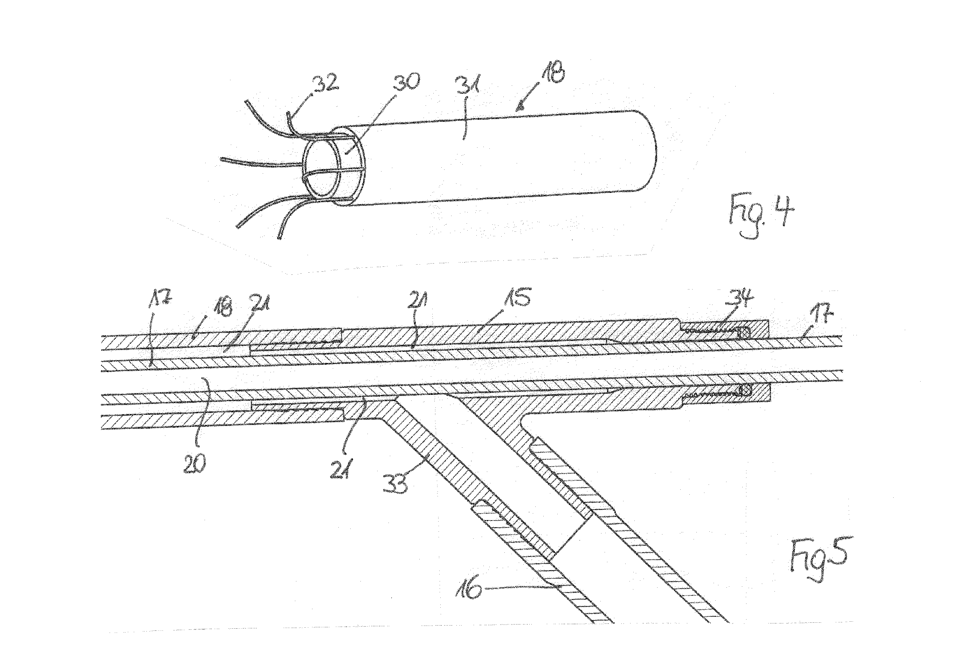

In dem inneren Schlauchkörper 17 ist ein Kanal 20 zur Durchleitung des Mediums, beispielsweise eines Kraftstoffes oder von ADBLUE von der Zapfsäule zum Fahrzeugvorratsbehälter ausgebildet, und dieserhalb ist der innere Schlauchkörper 17 geradlinig durch das am Ende des Schlauches 11 angeordnete Y-förmige Anschlussstück 15 hindurchgeführt. Der angesprochene, zwischen innerem Schlauchkörper 17 und äußerem Schlauchkörper 18 bestehende Ringraum dient als Kanal 21 zur Durchleitung der Betankungsvorgang aus dem Fahrzeugvorratsbehälter abzuführenden Dämpfe, wobei das am zapfsäulenseitigen Ende 14 des Schlauches 11 angeordnete Y-förmige Anschlussstück 15 mit einem gesonderten Ausgang 33 (Figur 5) an den Kanal 21 derart angeschlossen ist, dass die Dämpfe aus Kanal 21 in den Ausgang 33 eintreten und über den an den Ausgang 33 angeschlossenen Anschlussschlauch 16 abgeführt werden.

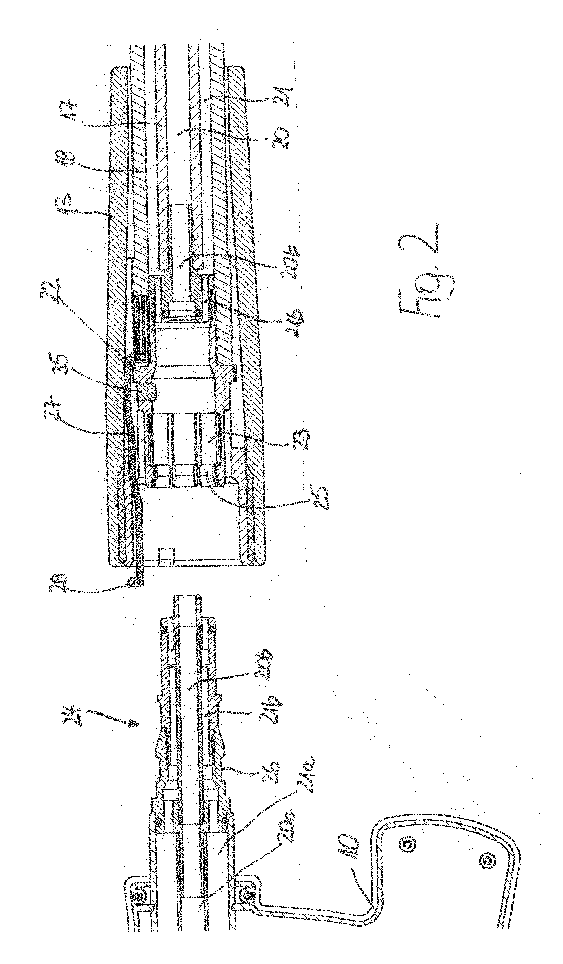

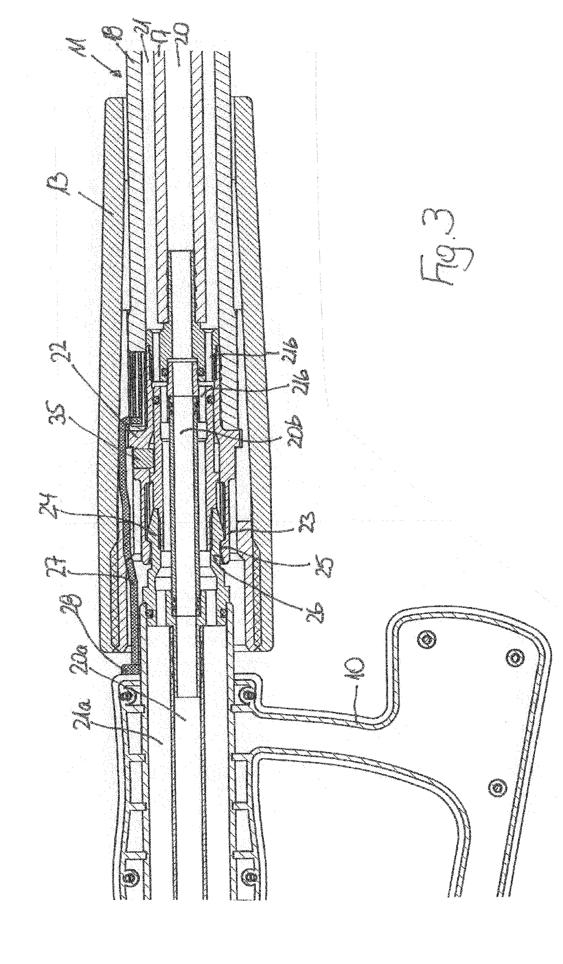

Wie sich deutlicher aus Figuren 2 und 3 ergibt, ist am der Zapfpistole 10 zugewandten Ende des Schlauches 11 ein Kupplungsstück 22 angebracht, welches an seinem der Zapfpistole zugeordneten Ende ringförmig angeordnete Verriegelungsmittel in Form von Fingern 23 mit an deren Ende ausgebildetten, nach innen vorspringenden Vorsprüngen 25 aufweist. Die Finger 23 sind dabei federnd derart ausgebildet, dass die Finger 23 nach auswärts nachgeben können.

Dementsprechend ist an dem dem Schlauch 11 zugewandten Ende der Zapfpistole 10 ein Ansatz 24 angeordnet, an dessen äußeren Umfang ein Rücksprung 26 ausgebildet ist, so dass beim Einstecken des Ansatzes 24 der Zapfpistole 10 in das Kupplungsstück 22 die Vorsprünge 25 der federnden Finger 23 in den Rücksprung 26 einrasten und somit für eine feste, bei entsprechender Zugbelastung aber lösbare Verbindung zwischen Kupplungsstück 22 und Ansatz 24 der Zapfpistole 10 sorgen. Auch in der Zapfpistole 10 ist ein Kanal 20a zur Durchleitung des Mediums einerseits und ein weiterer Kanal 21 a zur Durchleitung der Dämpfe andererseits ausgebildet; entsprechende Kanäle 20b und 21b befinden sich auch in dem Ansatz 24 sowie in Kupplungsstück 22, welches mit seinen Kanälen 20b, 21b an die im inneren Schlauchkörper 17 bzw. im Ringraum zwischen innerem Schlauchkörper 17 und äußerem Schlauchkörper 18 angeordneten Kanäle 20, 21 angeschlossen ist. Auf die Ausbildung der Kanäle im Einzelnen in der Zapfpistole 10, dem Ansatz 24 wie auch im Kupplungsstück 22 kommt es für die Verwirklichung der Erfindung nicht an. Jedenfalls ist bei in das Kupplungsstück 22 eingestecktem Ansatz 24 der Zapfpistole 10 dafür Rechnung getragen, dass der Mediumkanal 20 und auch der Dampfkanal 21 vom Schlauch 11 über das Kupplungsstück 22, den Ansatz 24 und die Zapfpistole 10 an den Fahrzeugvorratsbehälter angeschlossen sind.

Es ist vorgesehen, dass bei miteinander verriegeltem Ansatz 24 und Kupplungsstück 22 gleichwohl Verdrehung der beiden Teile gegeneinander möglich ist. Hierzu ist an dem Kupplungsstück 22 ein radial nach innen abstehender Stift 35 angeordnet, der in eine über einen vorgegebenen Umfangsbereich in dem Ansatz 24 ausgebildete Ausfräsung eingreift und darin geführt ist. Der Winkel der gegenseitigen Verdrehung von Kupplungsstück 22 und Ansatz 24 bzw. die Länge der Ausfräsung in Umfangsrichtung des Ansatzes 24 kann dabei beispielsweise auf 270 Grad eingestellt sein.

Soweit im Rahmen einer Betankung für eine Übertragung von Signalen von der Zapfpistole 10 zur Tanksäule Sorge getragen werden muss, ist erfindungsgemäß entsprechend der Darstellung in Figur 4 vorgesehen, dass zur Übertragung von Signalen einzelne, gegeneinander abgeschirmte Litzen 32 an dem Schlauch verlegt sind. Hierzu ist der äußere Schlauchkörper 18 zweiteilig mit einem Innenmantel 30 und einem Außenmantel 31 ausgebildet, wobei die zur Signalübcrtragung vorgesehenen Litzen 32 zwischen dem Innenmantel 30 und dem Außenmantel 31 angeordnet und vorzugsweise wendelförmig um den Innenmantel geschlungen sind. Wie sich weiterhin aus Figuren 2 und 3 entnehmen lässt, sind die Litzen 32 am zapfpistolenseitigen Ende des Schlauches 11 zu einer Signalleitung 27 zusammengefasst, wobei die gegenseitige Abschirmung der Litzen 32 aufrechterhalten ist. Die Signalleitung 27 ist zur Überbrückung des Kupplungsstücks 22 und des darin eingesteckten Ansatzes 24 der Zapfpistole 10 eingerichtet und an ihrem freien Ende mit einem elektrischen Stecker 28 versehen, der in eine entsprechend in der Zapfpistole ausgebildete Steckeraufnahme 29 einzustecken ist, sich aber bei einer Trennung von Schlauchende und Zapfpistole 10 ebenfalls von der Zapfpistole trennt. Von dem Steckeranschluss 29 führen entsprechende Signalverbindungen zur nicht weiter dargestellten Signalaufrahme der Zapfpistole.

Aus Figur 5 ist nochmals die Anordnung des Y-förmigen Anschlussstücks 15 erkennbar, durch welches der innere Schlauchkörper 17 geradlinig hindurchgeführt ist, wobei das entsprechende Ende des Anschlussstücks 15 mit einer Endmuffe 34 versehen ist. Wie beschrieben ist an den weiteren Ausgang 33 des Anschlussstücks 15 der Anschlussschlauch 16 anschließbar (Figur 1).

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Betankungsvorrichtung für Kraftfahrzeuge mit einem an eine mit einer Pumpe versehene Zapfsäule angeschlossenen Schlauch einer am Ende des Schlauches angeordnete Zapfpistole, wobei der Schlauch zwei konzentrisch zueinander angeordnete Kanäle zur Durchleitung von Medium zur Zapfpistole und zur Rückleitung der beim Betanken aus dem Vorratsbehälter des Kraftfahrzeuges austretenden Dämpfe von der Zapfpistole weg aufweist, und wobei eine Vorrichtung zur selbsttätigen Unterbrechung der Verbindung zwischen Zapfsäule und Zapfpistole bei Überschreitung einer voreingestellten Zugbelastung vorgesehen ist, **dadurch gekennzeichnet, dass** der Schlauch (11) einen inneren, den Kanal (20) zur Durchleitung des Mediums aufweisenden Schlauchkörper (17) aufweist, der im Inneren eines äußeren Schlauchkörpers (18) verläuft_{,} so dass der Kanal (21) zur Durchleitung der Dämpfe von dem Ringraum zwischen dem inneren Schlauchkörper (17) und dem äußeren Schlauchkörper (18) gebildet ist, und dass die Unterbrechungsvorrichtung (12) durch ein am Ende des Schlauches (11) angebrachtes, entsprechend verlaufende Kanäle aufweisendes Kupplungsstück (22) und einen in das Kupplungsstück (22) eingesteckten und mit dem Kupplungsstück (22) durch formschlüssigen Eingriff von federnd ausgebildeten Verriegelungsmitteln lösbar verriegelten Ansatz (24) der Zapfpistole (10) gebildet ist, und dass in dem Mantel des äußeren Schlauchkörpers (18) eine Signalleitung zur Übertragung von Signalen von der Zapfpistole (10) zur Zapfsäule angeordnet ist, deren das Kupplungsstück (22) überbrückendes Ende mit einem in der Zapfpistole (10) angeordneten elektrischen Anschluss (29) verbunden ist.

2. Betankungsvorrichtung nach Anspruch 1 , **dadurch gekennzeichnet, dass** die Signalleitung aus einer Mehrzahl von einzelnen, getrennt voneinander im Mantel des äußeren Schlauchkörpers (18) verlegten Litzen (32) besteht, die im Bereich des Anschlusses des Kupplungsstückes (22) an dem Schlauch (11) unter Aufrechterhaltung einer gegenseitigen Abschirmung zu einem Verbindungskabel (27) zusammengefasst sind.

3. Betankungsvorrichtung nach Anspruch 2, **dadurch gekennzeichnet, dass** der äußere Schlauchkörper (18) zweiteilig mit einem Innenmantel (30) und einem Außenmantel (31) aufgebaut ist und die Litzen (32) zwischen dem Innenmantel (30) und dem Außenmantel (31) angeordnet sind.

4. Betankungsvorrichtung nach Anspruch 2 oder 3, **dadurch gekennzeichnet, dass** am Ende des Verbindungskabels (27) ein elektrischer Stecker (28) angebracht ist, der in eine an der Zapfpistole (10) ausgebildete Steckeraufnahme eingesteckt ist.

5. Betankungsvorrichtung nach einem der Ansprüche 1 bis 4, **dadurch gekennzeichnet, dass** die Verriegelungsmittel aus mehreren, konzentrisch an dem Kupplungsstück (22) auswärts federnd angeordneten Fingern (23) bestehen, die mit an ihnen angeordneten, radial nach innen vorstehenden Vorsprüngen (25) in einen am äußeren Umfang des zwischen die Finger (23) reichende Ansatzes (24) der Zapfpistole (10) ausgebildeten Rücksprung (26) rastend eingreifen.

6. Betankungsvorrichtung nach einem der Ansprüche 1 bis 5, **dadurch gekennzeichnet, dass** Kupplungsstück (22) und Ansatz (24) in miteinander verriegeltem Zustand gegeneinander verdrehbar sind, wobei eine zwischen Ansatz (24) und Kupplungsstück (22) wirksame Begrenzungsanordnung zur Festlegung des Verdrehweges vorgesehen ist.

7. Betankungsvorrichtung nach Anspruch 6, **dadurch gekennzeichnet, dass** als Begrenzungsanordnung an dem Kupplungsstück (22) ein radial abstehender Stift (35) ausgebildet ist, der in eine über einen vorgegebenen Umfangsbereich in dem Ansatz (24) ausgebildete Ausfräsung eingreift und darin geführt ist.

8. Betankungsvorrichtung nach Anspruch 6 oder 7, **dadurch gekennzeichnet, dass** der Winkel zur gegenseitigen Verdrehung von Kupplungsstück (22) und Ansatz 124) 270 Grad beträgt.

9. Betankungsvorrichtung nach einem der Ansprüche 1 bis 8, **dadurch gekennzeichnet, dass** an dem der Zapfsäule nahen Ende (14) des Schlauches (11) ein Y-förmiges Anschlussstück (15) derart an den inneren Schlauchkörper (17) und den äußeren Schlauchkörper (18) angeschlossen ist, dass der im inneren Schlauchkörper (17) verlaufende Kanal (20) durch das Anschlussstück (15) hindurchgeführt ist und der im Ringraum zwischen dem inneren Schlauchkörper (17) und dem äußeren Schlauchkörper (18) verlaufende Kanal (21) in einen zweiten, an dem Anschlussstück (15) ausgebildeten Ausgang (33) mündet.
